# EUROPÄISCHE PATENTSCHRIFT

(11) **EP 1 678 908 B1**
(45) Veröffentlichungstag und Bekanntmachung des Hinweises auf die Patenterteilung: **19.03.2008**
(21) Anmeldenummer: 04763382.1
(22) Anmeldetag: 21.07.2004
(51) Int. Cl.: H04L 29/06

(54) **VERFAHREN ZUR VERWALTUNG EINER GRUPPE VON NETZZUGANGSSERVERN**
METHOD FOR MANAGING A GROUP OF NETWORK ACCESS SERVERS
PROCEDE POUR GERER UN GROUPE DE SERVEURS D'ACCES AU RESEAU

(30) Priorität: 22.09.2003 DE 10343796
(43) Veröffentlichungstag der Anmeldung: 12.07.2006
(73) Patentinhaber: Nokia Siemens Networks GmbH & Co. KG, 81541 München (DE)
(72) Erfinder: FERENC, Deak, HU-1192 Budapest (HU); ENTLER, Wolfgang, A-1220 Wien (AT); GARAMVÖLGYI, Csaba, HU-1211 Budapest (HU); MATESSI, Andrea, Acton MA 01720 (US)
(74) Vertreter: Peham, Alois
(86) Internationale Anmeldenummer: PCT/EP2004/008157
(87) Internationale Veröffentlichungsnummer: WO 2005/039143

(56) Entgegenhaltungen:
- US-A- 6 073 176
- US-B1- 6 373 838
- ANONYMOUS: "Multichassis Multilink PPP (MMP)" CISCO SYSTEMS, [Online] 17. August 2001 (2001-08-17), XP002300000 INTERNET Gefunden im Internet: <URL:http://web.archive.org/web/2003040304 5628/http://www.cisco.com/warp/public/131/ 3.pdf> [gefunden am 2004-10-08]

## Beschreibung

Die Erfindung betrifft ein Verfahren zur Verwaltung einer Gruppe von Netzzugangsservern innerhalb der das "Multichassis Multilink Point to Point Protocol", kurz MMP, angewendet wird, wobei von jedem Netzzugangsserver dieser Gruppe eine Adressliste der übrigen Netzzugangsserver dieser Gruppe verwaltet wird. Weiterhin betrifft die Erfindung einen Netzzugangsserver zur Durchführung des erfindungsgemäßen Verfahrens.

Nach dem Stand der Technik ist es möglich, einzelne Verbindungen in einem Paketdatennetz nach dem Point to Point Protocol, kurz PPP, zu einer virtuellen Verbindung mit erhöhter Bandbreite zu bündeln, wobei diese virtuelle Verbindung als Multilink PPP Verbindung, kurz MP, oder MP-Bündel bezeichnet wird. Das PPP wurde dabei bereits in Network Working Group, Request for Comments: 1661, Category: Standards Track, "The Point-to-Point Protocol (PPP)", das MP in Network Working Group, Request for Comments: 1990, Category: Standards Track "The PPP Multilink Protocol (MP)" standardisiert.

Eine typische Anwendung hierfür ist zum Beispiel das Zusammenfassen von zwei B-Kanälen eines Basic-Rate ISDN Anschlusses. Die zu der gebündelten Verbindung gehörenden PPP-Pakete können dann auf beiden B-Kanälen parallel übertragen werden. Des weiteren können größere Pakete zerteilt werden und die entstehenden Fragmente auf die B-Kanäle verteilt werden. Eine empfangende MP-Einrichtung muss dabei in der Lage sein, die empfangenen Fragmente wieder zusammenzufügen und die Pakete in der richtigen Reihenfolge weiterzugeben.

Da Remote Access Service Systeme, kurz RAS Systeme, typischerweise aus mehreren getrennten Zugangs-Baugruppen bestehen, welche auch als Network Access Server, kurz NAS, bezeichnet werden, entsteht mit Multilink PPP ein Problem. Im allgemeinen werden die zu einem MP Bündel gehörenden einzelnen PPP-Verbindungen nämlich nicht auf einen gemeinsamen Network Access Server gelenkt. Die Information ob eine einzelne PPP-Verbindung zu einem MP-Bündel gehört und wenn ja, zu welchem, ist ja erst nach Abschluss der PPP Ausverhandlungen (der LCP Phase) und der Authentifizierungsphase vorhanden.

Damit entsteht die Notwendigkeit, dass sich die einzelnen Network Access Server oder Netzzugangsserver über die von ihnen verwalteten MP-Bündel verständigen, was als "Bundle Discovery" bezeichnet wird. Dazu existieren bereits Lösungen, zum Beispiel Network Working Group RFC 2701, Category: Informational Nortel Networks, "Multi-link Multi-node PPP Bundle Discovery Protocol" oder Cisco, "Multichassis Multilink PPP (MMP)", http://www.cisco.com/warp/public/131/3.html.

Im Zuge der Bundle Discovery Phase wird einer jener Netzzugangsserver, die einzelne PPP Verbindungen für ein bestimmtes MP-Bündel besitzen, ausgewählt, um die Rolle des sogenannten "Bundle Heads" zu übernehmen. Alle anderen Network Access Server leiten die Multilink-Pakete, die sie auf ihren zum MP Bündel gehörenden PPP Verbindungen erhalten, zum Bundle Head weiter. Am Bundle Head werden die MP Fragmente zusammengefügt und in korrekter Reihenfolge an die höherliegenden Schichten, zum Beispiel an das Internet Protokoll, weitergegeben.

Der Transport der Multilink-Pakete zwischen den Netzzugangsservern erfolgt mittels eines Layer-2-Tunneling-Protokolls, beispielsweise L2TP oder L2F. Das geschilderte Verfahren wird auch als Multichassis Multilink PPP, kurz MMP, bezeichnet.

Die Gruppe von Netzzugangsservern, innerhalb der das MMP möglich sein soll, wird auch als "Stack Group" bezeichnet. Der genaue Ablauf und die Effizienz der Bundle Discovery Phase hängt unter anderem davon ab, ob sich die einzelnen Mitglieder der Gruppe kennen oder nicht. Bei der bereits erwähnten, in RFC 2701 beschriebenen Lösung ist dies nicht der Fall. Wenn auf einem Netzzugangsserver festgestellt wird, dass auf einer lokalen PPP Verbindung Multilink PPP ausverhandelt wurde, muss festgestellt werden, welche von folgenden Alternativen zutrifft:
1. Das MP Bündel existiert bereits und der lokale Netzzugangsserver selbst ist Bundle Head.
2. Das MP Bündel existiert bereits und ein anderer Netzzugangsserver ist Bundle Head.
3. Das MP Bündel existiert noch nicht.

Ob Fall 1 zutrifft kann lokal an einem Netzzugangsserver ermittelt werden. Um zwischen Fall 2 und 3 zu unterscheiden, muss jedoch ein Bundle Discovery durchgeführt werden. In RFC 2701 ist dazu folgender Ablauf beschrieben: Der Netzzugangsserver sendet eine Anforderung an eine Verteileradresse in Form eines IP-Multicast aus. Da einem Netzzugangsserver nicht bekannt ist, welche anderen Mitglieder die Gruppe umfasst, muss für eine bestimmte Zeitspanne gewartet werden, ob eine positive Antwort (in diesem Fall ist ein Bündel vorhanden) eines anderen Netzzugangsservers (des Bundle Heads) ein-Zeitspanne gewartet werden, ob eine positive Antwort (in diesem Fall ist ein Bündel vorhanden) eines anderen Netzzugangsservers (des Bundle Heads) eintrifft. Je nach der vorhandenen Netzwerktopologie muss diese Zeitspanne verschieden groß festgelegt werden und kann die zum Aufbau einer Verbindung benötigten Zeit verlängern.

Wenn ein Netzzugangsserver die anderen Mitglieder einer Gruppe kennt, braucht dagegen lediglich gewartet werden bis Antworten, das sind sowohl positive als auch negative, von allen Mitgliedern eingetroffen sind. Dies ist im sogenannten Stack Group Bidding Protocol, kurz SGBP (siehe auch Cisco, "Multichassis Multilink PPP (MMP)", http://www:cisco.com/warp/public/131/3.html), so gelöst, allerdings besteht der Nachteil, dass die Gruppe manuell konfiguriert werden muss.

Der Erfindung liegt also die Aufgabe zugrunde, ein verbessertes Verfahren zur Verwaltung einer Gruppe von Netzzugangsservern anzugeben.

Dies geschieht erfindungsgemäß mit einem Verfahren der eingangs genannten Art, bei dem:
- bei der Anmeldung eines neuen Netzzugangsservers zu einer Gruppe von Netzzugangsservern eine erste Nachricht vom neuen Netzzugangsserver an die Netzzugangsserver dieser Gruppe gesendet wird,
- die Netzzugangsserver dieser Gruppe die Adresse des neuen Netzzugangsservers in einer Adressliste speichern und jeweils eine zweite Nachricht an den neuen Netzzugangsserver schicken,
- die zweiten Nachrichten vom neuen Netzzugangsserver empfangen und zur Erstellung und Speicherung einer Adressliste aller Netzzugangsserver dieser Gruppe herangezogen werden.

Dies ist ein besonders einfach umzusetzendes und damit vorteilhaftes Verfahren zur Verwaltung einer Gruppe von Netzzugangsservern, durch das eine Adressliste eines Netzzugangsservers stets den aktuellen Stand der in der Gruppe befindlichen Netzzugangsserver aufweist des erfindungsgemäßen Verfahrens. Einer ersten Nachricht des neuen Netzzugangsservers folgen dabei zweite Nachrichten der Netzzugangsserver einer Gruppe. Da die Nachrichten die Adressen der Absender enthalten, können so auf vorteilhafte Weise Adresslisten in den Netzzugangsservern angelegt werden, sowohl im neuen Netzzugangsserver als auch in den Netzzugangsservern der Gruppe.

Vorteilhaft ist es weiterhin,
- wenn einem Netzzugangsserver der Gruppe eine Wiederholzeit zugeordnet ist, die angibt in welchen Zeitabständen periodisch wiederkehrend die zweite Nachricht vom Netzzugangsserver an die übrigen Netzzugangsserver der Gruppe gesendet wird und
- wenn der Netzzugangsserver aus den Adresslisten der übrigen Netzzugangsserver dieser Gruppe gestrichen wird, wenn die zweite Nachricht nicht vor Ablauf der Wiederholzeit von diesen empfangen wird.

Hierbei wird vorteilhaft kontrolliert ob ein Netzzugangsserver tatsächlich noch Mitglied der Gruppe von Netzzugangsservern ist oder ob beispielsweise eine Verbindung zu diesem Server wegen eines technischen Gebrechens ausgefallen ist. Trifft dies zu, so wird der betreffende Netzzugangsserver aus den Adresslisten der übrigen Netzzugangsserver gestrichen.

Günstig ist ein Verfahren,
- bei dem die Wiederholzeit in der ersten Nachricht enthalten ist und
- bei dem diese Wiederholzeit von den Netzzugangsservern dieser Gruppe bei der Anmeldung eines neuen Netzzugangsservers in einer Liste gespeichert wird.

Die Wiederholzeit wird bei dieser Variante also vom neuen Netzzugangsserver direkt bei der Anmeldung zu der Gruppe von Netzzugangsservern an diese übermittelt. Die Netzzugangsserver speichern die Wiederholzeit in Folge in einer Liste ab und können mit der Überwachung des Eintreffens einer zweiten Nachricht vorteilhaft sofort beginnen. Denkbar ist dabei eine eigene Liste oder eine dafür vorgesehene Spalte in der Adressliste.

Günstig ist es weiterhin, wenn für die periodisch wiederkehrende Benachrichtigung anstelle der zweiten Nachricht eine vierte Nachricht vorgesehen wird. Dabei wird für den Anmeldevorgang also nach wie vor eine zweite Nachricht, für die Kontrolle, ob ein Netzzugangsserver tatsächlich noch Mitglied der Gruppe von Netzzugangsservern ist öder ob beispielsweise eine Verbindung zu diesem Server wegen eines technischen Gebrechens ausgefallen ist, jedoch eine vierte, vom Anmeldevorgang unabhängige, Nachricht verwendet. Dies ist vorteilhaft, um die einzelnen Verfahrensabschnitte auch hinsichtlich der Nachrichten besser zu trennen.

Eine vorteilhafte Variante der Erfindung ist weiterhin mit einem Verfahren gegeben,
- bei dem von einem Netzzugangsserver der Gruppe eine dritte Nachricht an die übrigen Netzzugangsserver der Gruppe gesendet wird und
- bei dem die übrigen Netzzugangsserver dieser Gruppe diesen Netzzugangsserver bei Erhalt dieser Nachricht aus ihren Adresslisten löschen.

Ein Netzzugangsserver kann auf diese Weise aktiv - das heißt nicht bloß aufgrund des Ausbleibens einer zweiten Nachricht - von der Gruppe abgemeldet werden. Eventuelle Missverständnisse ob das Ausbleiben einer zweiten Nachricht auf einen Fehler zurückzuführen ist oder ob das Ausbleiben gewünscht erfolgt, um einen Netzzugangsserver abzumelden, werden so vorteilhaft vermieden.

Günstig ist es, wenn zum Versenden der ersten und/oder zweiten und/oder dritten Nachrichten sowie der vierten Nachrichten innerhalb der Gruppe von Netzzugangsservern eine Verteileradresse verwendet wird, welche Adressen zumindest aller Netzzugangsserver dieser Gruppe umfasst, wobei eine Nachricht eine Identifikation der Gruppe beinhaltet.

Die Verteileradresse umfasst also zumindest alle potentiellen Mitglieder einer Gruppe. Denkbar ist auch, dass verschiedene Gruppen dieselbe Verteileradresse verwenden, weswegen die Empfänger einer Nachricht eine mitübermittelte Gruppenidentifikation auswerten. Für den Betreiber eines Paketdatennetzes entsteht dabei auf vorteilhafte Weise nur geringer Aufwand für die Konfiguration des Netzes.

Die Aufgabe der Erfindung wird auch mit einem Netzzugangsserver gelöst, umfassend:
- Mittel zum Empfang einer ersten Nachricht, welche die Anmeldung eines neuen Netzzugangsservers zu einer Gruppe von Netzzugangsservern anzeigt,
- Mittel zum Speichern einer Adresse des neuen Netzzugangsservers in einer Adressliste, wobei die Adresse in der ersten Nachricht enthalten ist,
- Mittel zum Senden einer zweiten Nachricht an den neuen Netzzugangsserver und
- Mittel zum Empfang von zweiten Nachrichten und Mittel zur Erstellung und Speicherung einer Adressliste aller Netzzugangsserver einer Gruppe wobei die Adressen in den zweiten Nachrichten enthalten sind.

Durch den erfindungsgemäßen Netzserver wird somit das besonders einfach umzusetzende und damit vorteilhafte, erfindungsgemäße Verfahren zur Verwaltung einer Gruppe von Netzzugangsservern ermöglicht. Ein Netzzugangsserver umfasst dabei Mittel, die eigene Adresse an die Netzzugangsserver einer Gruppe zu übermitteln, sowie Mittel Adresslisten der übrigen Netzzugangsserver einer Gruppe anzulegen.

Vorteilhaft ist ein Netzzugangsserver,
- welcher Mittel zum periodisch wiederkehrenden Senden der zweiten Nachricht an die übrigen Netzzugangsserver der Gruppe umfasst,
- welcher Mittel zum Speichern einer einem Netzzugangsserver zugeordneten Wiederholzeit umfasst,
- welcher Mittel zur Überwachung beinhaltet, ob die zweite Nachricht eines Netzzugangsservers vor Ablauf der ihm zugeordneten Wiederholzeit empfangen wurde, und
- welcher Mittel zum Streichen eines Netzzugangsservers aus einer Adressliste umfasst.

Der Netzzugangsserver umfasst hier vorteilhaft Elemente für die Kontrolle ob ein Netzzugangsserver tatsächlich noch Mitglied der Gruppe von Netzzugangsservern ist oder ob beispielsweise eine Verbindung zu diesem Server wegen eines technischen Gebrechens ausgefallen ist. Weiterhin umfasst dieser auch Mittel, um den übrigen Netzzugangsservern seine aktive Teilnahme an der Gruppe laufend anzuzeigen.

Günstig ist es,
- wenn der Netzzugangsserver Mittel zum Speichern einer in der ersten Nachricht enthaltenen Wiederholzeit in einer Liste umfasst.

Ein erfindungsgemäßer Netzzugangsserver umfasst also Mittel, die Wiederholzeit direkt bei der Anmeldung eines neuen Netzzugangsservers in einer Liste abzuspeichern, weswegen mit der Überwachung des Eintreffens einer zweiten Nachricht vorteilhaft sofort begonnen werden kann. Denkbar ist dabei eine eigene Liste oder eine dafür vorgesehene Spalte in der Adressliste.

Günstig ist es auch,
- wenn der Netzzugangsserver Mittel zum Senden einer dritten Nachricht an die übrigen Netzzugangsserver der Gruppe umfasst und
- wenn der Netzzugangsserver Mittel zum Löschen eines Netzzugangsservers, von dem eine dritte Nachricht erhalten worden ist, aus einer Adressliste umfasst.

Ein Netzzugangsserver umfasst dabei vorteilhaft Mittel, um die aktive Abmeldung eines anderen Netzzugangsservers zu erkennen beziehungsweise Mittel, um anderen Netzzugangsservern die eigene Abmeldung anzuzeigen. Eventuelle Missverständnisse ob das Ausbleiben einer zweiten Nachricht auf einen Fehler zurückzuführen sind oder ob das Ausbleiben gewünscht erfolgt, um einen Netzzugangsserver abzumelden, können so vorteilhaft vermieden werden.

Eine günstige Ausgestaltung eines Netzzugangsservers ist auch gegeben, wenn als Mittel zum Versenden der ersten und/oder zweiten und/oder dritten sowie vierten Nachrichten eine Verteileradresse vorgesehen ist, welche Adressen zumindest aller Netzzugangsserver dieser Gruppe umfasst und eine der Gruppe zugeordnete Identifikation enthält

Die Verteileradresse umfasst also zumindest alle potentiellen Mitglieder einer Gruppe. Denkbar ist auch, dass verschiedene Gruppen dieselbe Verteileradresse verwenden, weswegen die Empfänger einer Nachricht Mittel für die Auswertung einer mitübermittelte Gruppenidentifikation umfassen. Für den Betreiber eines Paketdatennetzes entsteht dabei auf vorteilhafte Weise nur geringer Aufwand für die Konfiguration des Netzes.

Die Erfindung wird anhand eines in den Figuren dargestellten Ausführungsbeispiels näher erläutert, welches die An- und Abmeldung eines Netzzugangsservers zu und von einer Gruppe von Netzzugangsservern betrifft.

Es zeigen:
- Figur 1:: die Anmeldung eines neuen Netzzugangsservers ZSN+1 zu einer Gruppe von Netzzugangsservern ZS1, ZS2, ..., ZSN;
- Figur 2:: eine Rückmeldung in Form einer zweiten Nachricht N2 der Gruppe von Netzzugangsservern ZS1, ZS2, ..., ZSN an den neuen Netzzugangsservers ZSN+1
- Figur 3:: die periodisch wiederkehrende Meldung eines Netzzugangsservers ZS bei den übrigen Netzzugangsservern der Gruppe;
- Figur 4:: die Abmeldung des n-ten Netzzugangsservers ZSN von der Gruppe der Netzzugangsserver ZS

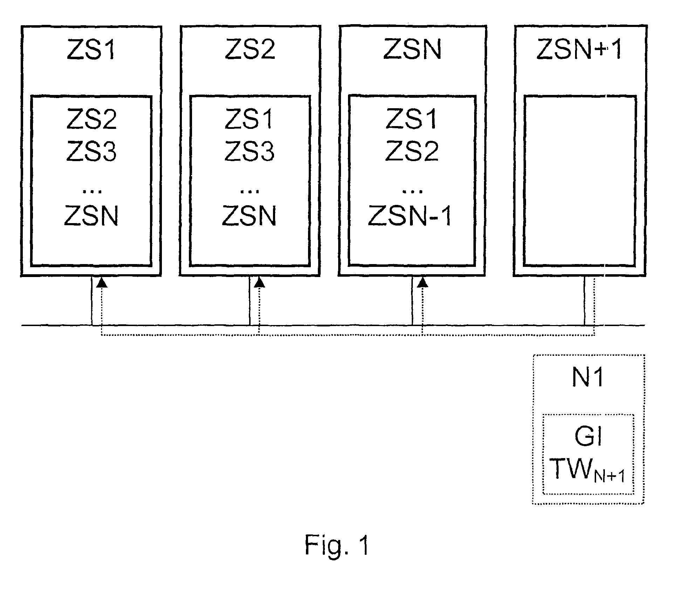

Die Figuren 1 bis 4 zeigen jeweils einen ersten bis n-ten Zugangsserver ZS1, ZS2, ..., ZSN sowie einen neuen Zugangsserver ZSN+1. Alle Zugangsserver ZS sind dabei untereinander verbunden und können über diese Verbindungen Nachrichten austauschen. Des weiteren umfasst jeder Zugangsserver ZS eine Liste der übrigen Netzzugangsserver ZS der Gruppe.

Die Funktion der in den Figuren dargestellten Anordnung wird im folgenden näher erläutert.

Figur 1 zeigt die Anmeldung eines neuen Netzzugangsservers ZSN+1 zu einer Gruppe von Netzzugangsservern ZS1, ZS2, ..., ZSN. Da jeder Zugangsserver ZS eine Liste der übrigen Netzzugangsserver ZS der Gruppe umfasst, zeigt die Adressliste des ersten Netzzugangsservers ZS1 daher beispielsweise die Einträge ZS2, ZS3, ..., ZSN. Die Adressliste des neuen Netzzugangsservers ZSN+1 ist dagegen noch leer. Als erster Schritt wird vom neuen Netzzugangsserver ZSN+1 eine erste Nachricht N1 an die Gruppe von Netzzugangsservern ZS1, ZS2, ..., ZSN geschickt. Dies erfolgt über eine Verteileradresse, welche die Adressen aller Netzzugangsserver dieser Gruppe ZS1, ZS2, ..., ZSN umfasst. Da die Verteiladresse auch andere Netzzugangsserver ZS umfassen kann, beinhaltet die erste Nachricht N1 eine Identifikation der Gruppe GI. Des weiteren beinhaltet die erste Nachricht N1 eine dem neuen Netzzugangsserver ZSN+1 zugeordnete Wiederholzeit TWN+1.

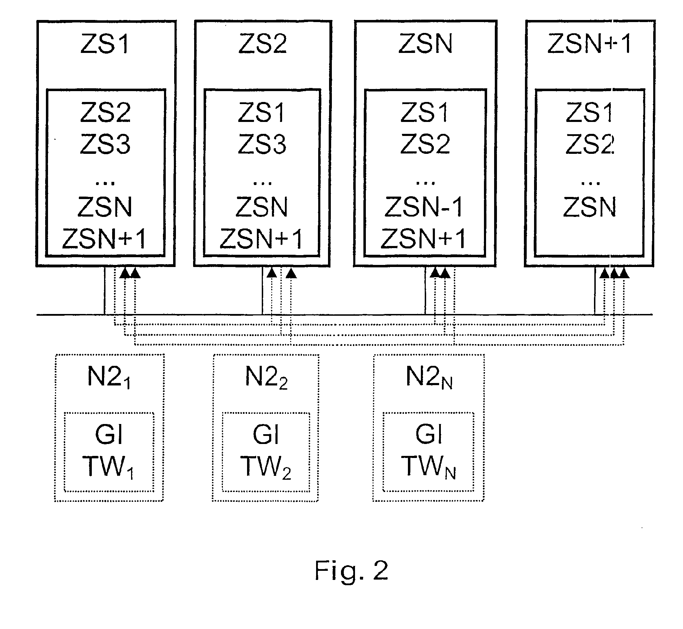

In Folge wird - wie Figur 2 zeigt - die Adresse des neuen Netzzugangsservers ZSN+1 in den Adresslisten der Netzzugangsserver der Gruppe ZS1, ZS2, ..., ZSN eingetragen. Die Adressliste des ersten Netzzugangsservers ZS1 zeigt daher nun die Einträge ZS2, ZS3, ..., ZSN, ZSN+1. Es wird dabei angenommen, dass die Wiederholzeit TWN+1 in einer eigenen Spalte gespeichert wird, welche der besseren Übersicht halber in der Figur jedoch nicht dargestellt ist. Die Adressliste des neuen Netzzugangsservers ZSN+1 ist zu diesem Zeitpunkt dagegen immer noch leer. In Folge werden von den Netzzugangsservern der Gruppe ZS1, ZS2, ..., ZSN zweite Nachrichten N21, N22, ..., N2N an die Verteileradresse gesendet. Diese beinhalten jeweils eine Identifikation der Gruppe GI sowie die den Netzzugangsservern zugeordneten Wiederholzeiten TM1, TW2, ..., TWN. Als nächster Schritt wird nun auch im neuen Netzzugangsserver ZSN+1 eine Adressliste aufgebaut. Diese umfasst die Einträge ZS1, ZS2, ..., ZSN.

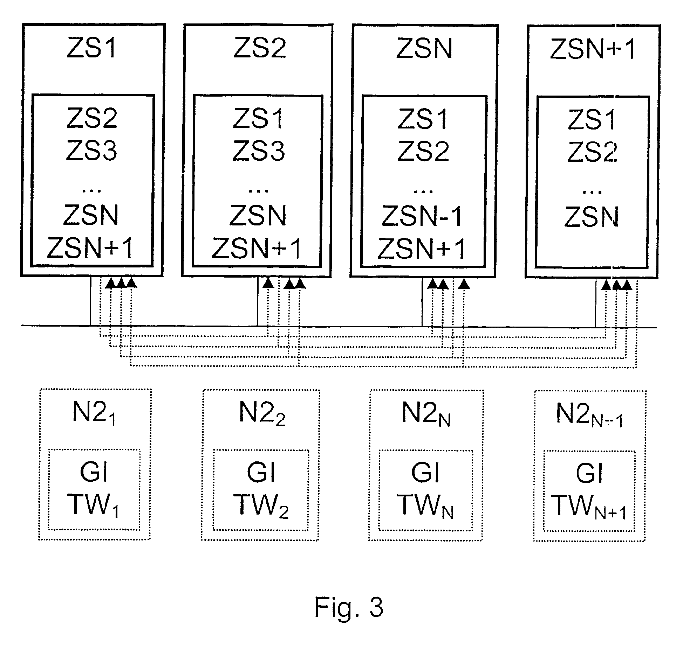

In Figur 3 ist dargestellt, dass jeder Netzzugangsserver ZS der Gruppe ZS1, ZS2, ..., ZSN+1 periodisch wiederkehrend, nämlich zu den Wiederholzeiten TW1, TW2, ..., TWN+1 eine zweite Nachricht N21, N22, ..., N2N+1 an die übrigen Netzzugangsserver ZS der Gruppe gesendet wird. Ein Netzzugangsserver ZS wird dabei aus den Adresslisten der übrigen Netzzugangsserver ZS dieser Gruppe gestrichen, wenn die zweite Nachricht N2 nicht vor Ablauf der Wiederholzeit TW von diesen empfangen wird. Dieser Fall tritt beim gezeigten Beispiel jedoch nicht ein. Daher bleiben die Adresslisten unverändert.

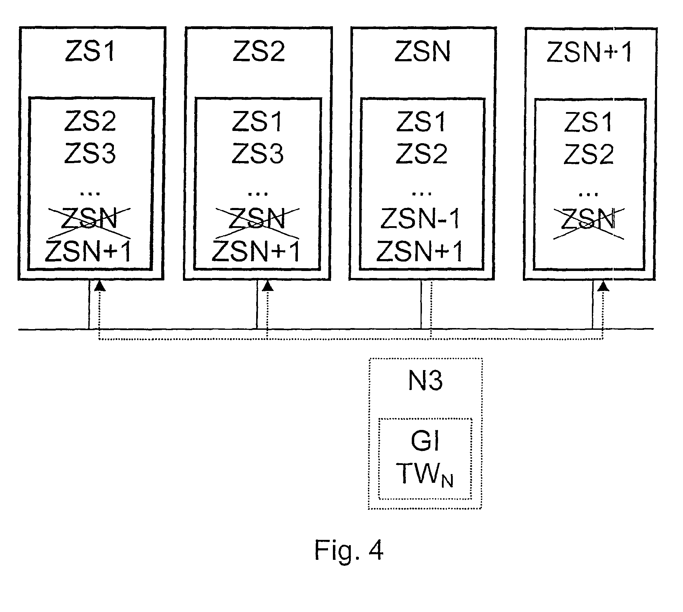

Figur 4 zeigt die Abmeldung des n-ten Netzzugangsservers ZSN von der Gruppe der Netzzugangsserver ZS. Hierfür wird eine dritte Nachricht N3, welche wiederum die Identifikation der Gruppe GI sowie eine zugeordnete Wiederholzeit TWN umfasst, über die Verteiladresse an die übrigen Netzzugangsserver ZS der Gruppe gesandt. Dort wird bei Empfang dieser Nachricht N3 die Adressliste entsprechend angepasst, das heißt der n-te Zugangsserver ZSN gestrichen.

## Patentansprüche

1. Verfahren zur Verwaltung einer Gruppe von Netzzugangsservern (ZS1, ZS2, ..., ZSN) innerhalb der das "Multichassis Multilink Point to Point Protocol", kurz MMP, angewendet wird, wobei von jedem Netzzugangsserver dieser Gruppe (ZS) eine Adressliste der übrigen Netzzugangsserver dieser Gruppe (ZS1, ZS2, ..., ZSN) verwaltet wird,
**dadurch gekennzeichnet,**
- **dass** bei der Anmeldung eines neuen Netzzugangsservers (ZSN+1) zu einer Gruppe von Netzzugangsservern (ZS1, ZS2, ..., ZSN) eine erste Nachricht (N1) vom neuen Netzzugangsserver (ZSN+1) an die Netzzugangsserver dieser Gruppe (ZS1, ZS2, ..., ZSN) gesendet wird,
- **dass** die Netzzugangsserver dieser Gruppe (ZS1, ZS2, ..., ZSN) die Adresse des neuen Netzzugangsservers (ZSN+1) in einer Adressliste speichern und jeweils eine zweite Nachricht (N21, N22, ..., N2N) an den neuen Netzzugangsserver (ZSN+1) schicken,
- **dass** die zweiten Nachrichten (N21, N22, ..., N2N) vom neuen Netzzugangsserver (ZSN+1) empfangen und zur Erstellung und Speicherung einer Adressliste aller Netzzugangsserver dieser Gruppe (ZS1, ZS2, ..., ZSN) herangezogen werden.

2. Verfahren nach Anspruch 1,
**dadurch gekennzeichnet,**
- **dass** einem Netzzugangsserver der Gruppe (ZS) eine Wiederholzeit (TW) zugeordnet ist, die angibt in welchen Zeitabständen periodisch wiederkehrend die zweite Nachricht (N2) vom Netzzugangsserver (ZS) an die übrigen Netzzugangsserver (ZS1, ZS2, ..., ZSN+1) der Gruppe gesendet wird und
- **dass** der Netzzugangsserver (ZS) aus den Adresslisten der übrigen Netzzugangsserver (ZS1, ZS2, ..., ZSN+1) dieser Gruppe gestrichen wird, wenn die zweite Nachricht (N2) nicht vor Ablauf der Wiederholzeit (TW) von diesen empfangen wird.

3. Verfahren nach Anspruch 1 und 2,
**dadurch gekennzeichnet,**
- **dass** die Wiederholzeit (TWN+1) in der ersten Nachricht (N1) enthalten ist und
- **dass** diese Wiederholzeit (TWN+1) von den Netzzugangsservern dieser Gruppe (ZS1, ZS2, ..., ZSN) bei der Anmeldung eines neuen Netzzugangsservers (ZSN+1) in einer Liste gespeichert wird.

4. Verfahren nach einem der Ansprüche 2 oder 3, **dadurch gekennzeichnet, dass** für die periodisch wiederkehrende Benachrichtigung anstelle der zweiten Nachricht (N2) eine vierte Nachricht vorgesehen wird.

5. Verfahren nach einem der Ansprüche 1 bis 4,
**dadurch gekennzeichnet,**
- **dass** von einem Netzzugangsserver (ZSN) der Gruppe eine dritte Nachricht (N3) an die übrigen Netzzugangsserver (ZS1, ZS2, ..., ZSN+1) der Gruppe gesendet wird und
- **dass** die übrigen Netzzugangsserver (ZS1, ZS2, ..., ZSN+1) dieser Gruppe diesen Netzzugangsserver (ZSN) bei Erhalt dieser Nachricht (N3) aus ihren Adresslisten löschen.

6. Verfahren nach einem der Ansprüche 1 bis 5,
**dadurch gekennzeichnet,**
**dass** zum Versenden der ersten und/oder zweiten und/oder dritten Nachrichten (N1, N2, N3) sowie der vierten Nachrichten innerhalb der Gruppe von Netzzugangsservern (ZS1, ZS2, ..., ZSN+1) eine Verteileradresse verwendet wird, welche Adressen zumindest aller Netzzugangsserver dieser Gruppe (ZS1, ZS2, ..., ZSN+1) umfasst, wobei eine Nachricht eine Identifikation der Gruppe (GI) beinhaltet.

7. Netzzugangsserver (ZS), welcher Mittel zur Einbindung in eine Gruppe von Netzzugangsservern (ZS1, ZS2, ..., ZSN), innerhalb der das "Multichassis Multilink Point to Point Protocol", kurz MMP, angewendet wird, umfasst, wobei dieser Netzzugangsserver (ZS) eine Adressliste der übrigen Netzzugangsserver dieser Gruppe (ZS1, ZS2, ..., ZSN) umfasst,
**dadurch gekennzeichnet,**
- **dass** dieser Mittel zum Empfang einer ersten Nachricht (N1) umfasst, welche die Anmeldung eines neuen Netzzugangsservers (ZSN+1) zu einer Gruppe von Netzzugangsservern (ZS1, ZS2, ..., ZSN) anzeigt,
- **dass** dieser Mittel zum Speichern einer Adresse des neuen Netzzugangsservers (ZSN+1) in einer Adressliste umfasst, wobei die Adresse in der ersten Nachricht (N1) enthalten ist,
- **dass** dieser Mittel zum Senden einer zweiten Nachricht (N2) an den neuen Netzzugangsserver (ZSN+1) umfasst und
- **dass** dieser Mittel zum Empfang von zweiten Nachrichten (N21, N22, ..., N2N) und Mittel zur Erstellung und Speicherung einer Adressliste aller Netzzugangsserver einer Gruppe (ZS1, ZS2, ..., ZSN) umfasst, wobei die Adressen in den zweiten Nachrichten (N21, N22, ..., N2N) enthalten sind.

8. Netzzugangsserver (ZS) nach Anspruch 7,
**dadurch gekennzeichnet,**
- **dass** dieser Mittel zum periodisch wiederkehrenden Senden der zweiten Nachricht (N2) an die übrigen Netzzugangsserver der Gruppe (ZS1, ZS2, ..., ZSN) umfasst,
- **dass** dieser Mittel zum Speichern einer einem Netzzugangsserver (ZS) zugeordneten Wiederholzeit (TW) umfasst,
- **dass** dieser Mittel zur Überwachung beinhaltet, ob die zweite Nachricht (N2) eines Netzzugangsservers (ZS) vor Ablauf der ihm zugeordneten Wiederholzeit (TW) empfangen wurde, und
- **dass** dieser Mittel zum Streichen eines Netzzugangsservers (ZS) aus einer Adressliste umfasst.

## Claims

1. Method for administering a group of network access servers (ZS1, ZS2, ..., ZSN), within which the "Multichassis Multilink Point to Point Protocol", or MMP for short, is used, whereby an address list of the remaining network access servers in this group (ZS1, ZS2, ..., ZSN) is administered by each access server in this group (ZS),
**characterized in that**,
- when a new network access server (ZSN+1) logs on to a group of network access servers (ZS1, ZS2, ..., ZSN), a first message (N1) is transmitted from the new network access server (ZSN+1) to the network access servers in this group (ZS1, ZS2, ..., ZSN),
- the network access servers in this group (ZS1, ZS2, ..., ZSN) store the address of the new network access server (ZSN+1) in an address list and in each case send a second message (N21, N22, ..., N2N) to the new network access server (ZSN+1),
- the second messages (N21, N22, ..., N2N) are received by the new network access server (ZSN+1) and are used to create and store an address list of all network access servers in this group (ZS1, ZS2, ..., ZSN).

2. Method according to Claim 1,
**Characterized in that**
- a repetition time (TW) is allocated to a network access server in the group (ZS), indicating the time intervals at which the second message (N2) is transmitted in a periodically recurring manner from the network access server (ZS) to the remaining network access servers (ZS1, ZS2, ..., ZSN) in the group, and
- the network access server (ZS) is deleted from the address lists of the remaining network access servers in this group (ZS1, ZS2, ..., ZSN+1) if the second message (N2) is not received by the latter before the end of a repetition time (TW).

3. Method according to Claims 1 and 2,
**characterized in that**
- the repetition time (TWN+1) is contained in the first message (N1), and
- this repetition time (TWN+1) is stored in a list by the network access servers in this group (ZS1, ZS2, ..., ZSN) when a new network access server (ZSN+1) logs on.

4. Method according to one of the Claims 2 or 3, **characterized in that** a fourth message is provided instead of the second message (N2) for the periodically recurring notification.

5. Method according to one of the Claims 1 to 4, **characterized in that**
- a third message (N3) is transmitted from a network access server (ZSN) in the group to the remaining network access servers in the group (ZS1, ZS2, ..., ZSN+1), and
- the remaining network access servers in this group (ZS1, ZS2, ..., ZSN+1) delete this network access server (ZSN) from their address lists on receiving this message (N3).

6. Method according to one of Claims 1 to 5,
**characterized in that**
in order to despatch the first and/or second and/or third messages (N1, N2, N3) and the fourth messages within the group of network access servers (ZS1, ZS2, ..., ZSN+1), a distribution address is used which comprises addresses of at least all network access servers in this group (ZS1, ZS2, ..., ZSN+1), whereby one message contains an identification of the group (GI).

7. Network access server (ZS) which comprises means for incorporation into a group of network access servers (ZS1, ZS2, ..., ZSN), within which the "Multichassis Multilink Point to Point Protocol", or MMP for short, is used, whereby this network access server (ZS) comprises an address list of the remaining network access servers in this group (ZS1, ZS2, ..., ZSN), **characterized in that**
- the latter comprises means for receiving a first message (N1) which indicates the logon of a new network access server (ZSN+1) to a group of network access servers (ZS1, ZS2, ..., ZSN),
- the latter comprises means for storing an address of the new network access server (ZSN+1) in an address list, whereby the address is contained in the first message (N1),
- the latter comprises means for sending a second message (N2) to the new network access server (ZSN+1), and
- the latter comprises means for receiving second messages (N21, N22, ..., N2N) and means for creating and storing an address list of all network access servers in a group (ZS1, ZS2, ..., ZSN), whereby the addresses are contained in the second messages (N21, N22, ..., N2N).

8. Network access server (ZS) according to Claim 7,
**characterized in that**
- the latter comprises means for the periodically recurring transmission of the second message (N2) to the remaining network access servers in the group (ZS1, ZS2, ..., ZSN),
- the latter comprises means for storing a repetition time (TW) allocated to a network access server (ZS),
- the latter comprises means for monitoring whether the second message (N2) of a network access server (ZS) was received before the end of the repetition time (TW) allocated to it, and
- the latter comprises means for deleting a network access server (ZS) from an address list.

## Revendications

1. Procédé pour gérer un groupe de serveurs d'accès réseau (ZS1, ZS2, ..., ZSN) au sein duquel est utilisé le «Multichassis Multilink Point to Point Protocol», MMP en abrégé, chaque serveur d'accès réseau de ce groupe (ZS) gérant une liste d'adresses des autres serveurs d'accès réseau de ce groupe (ZS1, ZS2, ..., ZSN), **caractérisé en ce que**
- à la connexion d'un nouveau serveur d'accès réseau (ZSN+1) à un groupe de serveurs d'accès réseau (ZS1, ZS2, ..., ZSN), un premier message (N1) est envoyé par le nouveau serveur d'accès réseau (ZSN+1) aux serveurs d'accès réseau de ce groupe (ZS1, ZS2, ..., ZSN),
- les serveurs d'accès réseau de ce groupe (ZS1, ZS2, ..., ZSN) mettent l'adresse du nouveau serveur d'accès réseau (ZSN+1) en mémoire dans une liste d'adresses et envoient chacun un deuxième message (N21, N22, ..., N2N) au nouveau serveur d'accès réseau (ZSN+1),
- les deuxièmes messages (N21, N22, ..., N2N) sont reçus par le nouveau serveur d'accès réseau (ZSN+1) et il y est fait appel pour la création et la mise en mémoire d'une liste d'adresses de tous les serveurs d'accès réseau de ce groupe (ZS1, ZS2, ..., ZSN).

2. Procédé selon la revendication 1, **caractérisé en ce que**
- à un serveur d'accès réseau du groupe (ZS) est affecté un temps de répétition (TW) qui indique à quels intervalles de temps le deuxième message (N2) est envoyé, de façon répétée périodiquement, par le serveur d'accès réseau (ZS) aux autres serveurs d'accès réseau (ZS1, ZS2, ..., ZSN+1) du groupe et
- le serveur d'accès réseau (ZS) est supprimé des listes d'adresses des autres serveurs d'accès réseau (ZS1, ZS2, ..., ZSN+1) de ce groupe si le deuxième message (N2) n'est pas reçu par ceux-ci avant l'expiration du temps de répétition (TW).

3. Procédé selon la revendication 1 ou 2, **caractérisé en ce que**
- le temps de répétition (TWN+1) est contenu dans le premier message (N1) et
- ce temps de répétition (TWN+1) est mis en mémoire dans une liste par les serveurs d'accès réseau de ce groupe (ZS1, ZS2, ..., ZSN) à la connexion d'un nouveau serveur d'accès réseau (ZSN+1).

4. Procédé selon l'une des revendications 2 ou 3, **caractérisé en ce qu'**est prévu, pour la notification qui se répète périodiquement, un quatrième message au lieu du deuxième message (N2).

5. Procédé selon l'une des revendications 1 à 4, **caractérisé en ce que**
- un serveur d'accès réseau (ZSN) du groupe envoie un troisième message (N3) aux autres serveurs d'accès réseau (ZS1, ZS2, ..., ZSN+1) du groupe et
- les autres serveurs d'accès réseau (ZS1, ZS2, ..., ZSN+1) de ce groupe effacent ce serveur d'accès réseau (ZSN) de leurs listes d'adresses à la réception de ce message (N3).

6. Procédé selon l'une des revendications 1 à 5, **caractérisé en ce qu'**est utilisée, pour émettre les premiers et/ou les deuxièmes et/ou les troisièmes messages (N1, N2, N3) ainsi que les quatrièmes messages, au sein du groupe de serveurs d'accès réseau (ZS1, ZS2, ..., ZSN+1), une adresse de diffusion qui comprend des adresses au moins de tous les serveurs d'accès réseau de ce groupe (ZS1, ZS2, ..., ZSN), un message contenant une identification du groupe (GI).

7. Serveur d'accès réseau (ZS) qui comprend des moyens pour intégrer dans un groupe de serveurs d'accès réseau (ZS1, ZS2, ..., ZSN) au sein duquel est utilisé le «Multichassis Multilink Point to Point Protocol», MMP en abrégé, ce serveur d'accès réseau (ZS) comprenant une liste d'adresses des autres serveurs d'accès réseau de ce groupe (ZS1, ZS2, ..., ZSN), **caractérisé en ce que**
- celui-ci comprend des moyens pour recevoir un premier message (N1) qui indique la connexion d'un nouveau serveur d'accès réseau (ZSN+1) à un groupe de serveurs d'accès réseau (ZS1, ZS2, ..., ZSN),
- celui-ci comprend des moyens pour mettre une adresse du nouveau serveur d'accès réseau (ZSN+1) en mémoire dans une liste d'adresses, l'adresse étant contenue dans le premier message (N1),
- celui-ci comprend des moyens pour envoyer un deuxième message (N2) au nouveau serveur d'accès réseau (ZSN+1) et
- celui-ci comprend des moyens pour recevoir des deuxièmes messages (N21, N22, ..., N2N) et des moyens pour créer et stocker une liste d'adresses de tous les serveurs d'accès réseau d'un groupe (ZS1, ZS2, ..., ZSN), les adresses étant contenues dans les deuxièmes messages (N21, N22, ..., N2N).

8. Serveur d'accès réseau (ZS) selon la revendication 7, **caractérisé en ce que**
- celui-ci comprend des moyens pour envoyer le deuxième message (N2) de façon répétée périodiquement aux autres serveurs d'accès réseau du groupe (ZS1, ZS2, ..., ZSN),
- celui-ci comprend des moyens pour mettre en mémoire un temps de répétition (TW) affecté à un serveur d'accès réseau (ZS),
- celui-ci contient des moyens pour surveiller si le deuxième message (N2) d'un serveur d'accès réseau (ZS) a été reçu avant l'expiration du temps de répétition (TW) qui lui est affecté et
- celui-ci comprend des moyens pour supprimer un serveur d'accès réseau (ZS) d'une liste d'adresses.
